# EUROPÄISCHE PATENTANMELDUNG

(11) **EP 1 574 726 A1**
(43) Veröffentlichungstag der Anmeldung: **14.09.2005**
(21) Anmeldenummer: 05005483.2
(22) Anmeldetag: 14.03.2005
(51) Int. Cl.: F16B 12/20

(54) **Holzbauverbindung, insbesondere für Fertighäuser**

(30) Priorität: 13.03.2004 DE 202004004073 U
(71) Anmelder: BAU-FRITZ GmbH & Co. KG, 87746 Erkheim (DE)
(72) Erfinder: Fritz, Hubert, D-87746 Erkheim (DE)
(74) Vertreter: Fiener, Josef

(57) **Zusammenfassung**

Zur Schaffung einer Holzbauverbindung (1), insbesondere für Fertighäuser, zur Koppelung von Holz-Bauelementen (2) an Stossebenen (3) mittels formschlüssiger Beschläge wird vorgeschlagen, dass die Beschläge als Klammern (4) ausgebildet sind, in deren Nuten (4a) mehrere, überstehende Schraubenköpfe (5a) von Schrauben (5) einschiebbar sind, die in den Bauelementen (2) im Bereich der Stossebene (3) angeordnet sind.

## Beschreibung

Die Erfindung betrifft eine Holzbauverbindung mit den oberbegrifflichen Merkmalen des Anspruches 1.

Derartige Holzbauverbindungen mit formschlüssigen, ineinandergreifenden Beschlägen werden beim Aufbau von Fertighäusern verwendet, um die einzelnen Wandelemente miteinander zu koppeln (vgl. z.B. WO 021084129). Dies betrifft nicht nur die Außenwände, sondern auch Innen- oder Querwände des Fertighauses. Insbesondere die Montage von Querwänden ist dabei mit einem erhöhten Aufwand verbunden, da für eine sichere Verbindung entsprechende Gegenbalken beziehungsweise Rahmen vorhanden sein müssen. Meist wird hierbei eine Schraubverbindung eingesetzt, was jedoch zu einem erhöhten Montageaufwand führt und statische Unsicherheiten in sich birgt.

Darüber hinaus sind auch Steckverbindungen bekannt, wobei beispielsweise ein klammerförmiges Steckerteil in ein entsprechend ausgebildetes Nutteil eingefädelt wird. Für eine sichere Verbindung müssen hierzu dennoch Schrauben einzeln eingebracht werden oder weitere Bauteile, wie bei der vorstehenden WO 021084124 eine Sperrklappe, vorgesehen sein, die jedoch einen zusätzlichen Bauaufwand darstellt. Zudem ist bei der Montage auf der Baustelle eine bestimmte Abfolge zu beachten, da ansonsten beispielsweise ein Nutteil auf ein anderes Nutteil stoßen würde.

Demzufolge liegt der Erfindung die Aufgabe zugrunde, eine Holzbauverbindung zu schaffen, die besonders montagefreundlich und einfach herzustellen ist.

Diese Aufgabe wird gelöst durch eine Holzbauverbindung gemäß den Merkmalen des Anspruches 1. Bevorzugte Ausführungsformen sind Gegenstand der Unteransprüche.

Durch die vorgeschlagene Klammer, insbesondere als Aluminium-Gussteil, ergibt sich eine sichere Verbindung mit hoher Zugfestigkeit. Durch den bei der Montage der Klammer ausgeübten Zug wird nicht nur eine exakte Zentrierung der Verbindung erreicht, sondern auch ein Gegeneinanderziehen der Holzbauelemente an der Stossebene. Hierdurch wird die Verbindung besonders passgenau, robust und solide.

Zudem werden hierbei Dichtschnüre und dergleichen zwischen den Bauelementen beaufschlagt und somit besonders winddicht. Die Klammer greift hierbei an Schrauben bzw. deren Schraubenköpfen an, die im Werk mit entsprechend hoher Präzision in die Bauelemente, insbesondere jeweils in das Kopf- und Fußholz eingebracht werden können. Hierdurch wird eine besonders hohe Genauigkeit des Fertigbauwerks erreicht. Von Vorteil ist hierbei, dass die Schrauben gegenüber den Außenabmessungen der Bauelemente nicht oder kaum hervorspringen, so dass sich für die Monteure kaum Verletzungsgefahren und ein flüssiger Arbeitsablauf ergeben. Dies ist auch für den Transport besonders wichtig, da hierdurch wenig Platz beansprucht wird.

Die mit den Klammern zusammenwirkenden Schrauben werden dabei in das bei den Bauelementen ohnehin vorhandene Kopf- und Fußholz eingebracht, das jeweils mit einer kleinen Ausklinkung (von ca. 2 cm) um den Vorsprung des Schraubenkopfes kürzer gegenüber der Stossebene ist. Somit sind zum Anschluss keine zusätzlichen Wandrahmen erforderlich. Zudem ergibt sich hierdurch eine hohe statische Festigkeit, die exakt wiederholbar ist. Die Auszugsfestigkeit der üblicherweise verwendeten Schrauben lässt sich hierbei noch steigern, wenn die Schrauben schräg zur Hauptrichtung verlaufend in das Kopf- beziehungsweise Fußholz oder auch in mehrfachen Reihen übereinander eingedreht werden.

Die Klammer für die Holzbauverbindung weist wenigstens eine im Grund ausgerundete Nut auf, in die der Kopf der Holzbauschraube bei der Montage eingeführt wird. Die Nut ist hierbei zum Nutgrund hin verlaufend schräg ausgeführt, so dass sich in Querrichtung eine Zentrierung ergibt und zugleich in der Hauptrichtung der Holzbauelemente eine Zugkraft. Hierdurch ist eine exakt wiederholbare Verbindungskraft erzielbar. Zudem lässt sich diese Klammer vorzugsweise mit doppelten (oder mehr) Nuten relativ preiswert als Aluminium-Gussteil herstellen. Somit ergibt sich für die gesamte Montage des Fertighauses eine preiswerte Durchführung, insbesondere auch hinsichtlich der Montage- und Herstellungsgeschwindigkeit.

Nachfolgend werden mehrere Ausführungsbeispiele der Holzbauverbindung näher beschrieben und erläutert. Hierbei zeigen:
Fig. 1 eine schematische Darstellung der Holzbauverbindung;
Fig. 2 eine Seitenansicht einer bevorzugten Klammer der Holzbauverbindung; und
Fig. 3 eine Draufsicht der Holzbauverbindung zur Wandkopplung.

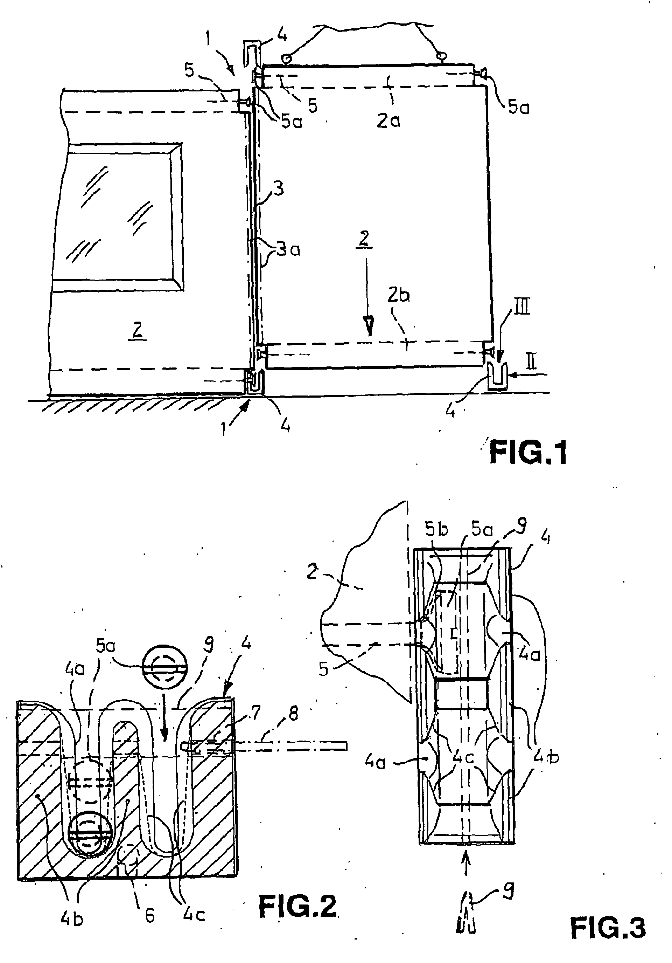

In Fig. 1 ist schematisch eine Holzbauverbindung 1 zur Kopplung benachbarter Bauelemente 2 dargestellt, Das hier mit einem Fenster versehene linke Bauelement 2 ist üblicherweise in Rahmenbauweise ausgebildet, wobei oben ein Kopfholz 2a und unten ein Fußholz 2b vorgesehen ist. An der Stoßebene 3 benachbarter Bauelemente 2 sind Dichtschnüre 3a (hier strichpunktiert angedeutet) vorgesehen, so dass nach Montage der Holzbauverbindung 1 die Bauelemente 2 mit den Dichtschnüren 3a fest aneinander gepresst werden. Hierzu werden die Bauelemente 2 nacheinander auf einer Bodenplatte abgesetzt, wie dies hier rechts angedeutet ist, nämlich üblicherweise ein Bauelement 2 mit einem Baukran abgelassen. Hierzu ist am Fußholz 2b eine Klammer 4 vorgesehen, nämlich mit Nuten 4a (vgl. Fig. 2 und 3) nach oben hin weisend montiert. Beim Absenken des hier rechten Bauelements 2 greifen die dort vorgesehenen Schrauben 5 mit ihren gegenüber der Stirnseite des Fußholzes 2b überstehenden, jedoch etwa bündig zur Stossebene 3 ausgerichteten Schraubenköpfen 5a in die Nuten 4a der Klammer 4 ein. Im abgesenkten Zustand koppelt somit die Klammer 4 die benachbarten Bauelemente 2 fest aneinander. Nach dem Absenken liegen auch an der Oberseite des Bauelements 2 die Schraubenköpfe 5a am Kopfholz 2a einander gegenüber, so dass von oben her die Klammer 4 mit dann nach unten hin ausgerichteten Nuten 4a leicht aufgesetzt werden kann. Wie aus der nachfolgenden Beschreibung ersichtlich wird, sind die Nuten 4a der Klammern 4 dabei so gestaltet, dass die Bauelemente 2 in ihrer Hauptebene (hier in der Zeichenebene) zueinander ausgerichtet werden, aber auch zueinander hingezogen werden. Somit ergibt sich eine besonders passgenaue und stabile Holzbauverbindung 1.

In Fig. 2 ist eine bevorzugte Ausführungsform der Klammer 4 (in Seitenansicht gemäß dem Pfeil II in Fig. 1 im Halbschnitt) gezeigt, die zusammen mit den Schrauben 5 die Holzbauverbindung 1 zur Koppelung der Bauelemente 2 bildet. Die Klammer 4 weist wenigstens eine Nut 4a, bevorzugt jedoch zwei (oder mehr) derartiger Nuten 4a auf. Es können jedoch auch drei oder mehr derartiger Nuten 4a vorgesehen sein, so dass sich eine Form ähnlich eines Kammes bildet. In diese Nuten 4a zwischen den Stegen oder Zinken 4b greift jeweils wenigstens eine Schraube 5 mit dem jeweiligen Schraubenkopf 5a ein. Der Schraubenkopf 5a ist hierbei in üblicher Weise konisch oder kegelförmig ausgebildet, so dass sich in der entsprechend hinterschnittenen Nut 4a mit konischen Schrägflächen 4c ein sicherer Halt ergibt (vgl. auch Fig. 3). Beim Ineinandergreifen der Schraube 5 und der Klammer 4 ergibt sich hierbei durch die leicht schräge Gestaltung der Nut 4a mit den Schrägflächen 4c eine exakte Ausrichtung und Zentrierung der Bauelemente 2 relativ zueinander. Zudem werden die Bauelemente 2 durch die schrägverlaufende Hinterschneidung der Nut 4a zueinander hingezogen. Dies gilt sowohl für die untere Holzbauverbindung 1, bei der die Schrauben 5 von oben in die Klammer 4 abgesenkt werden, als auch für die obere Holzbauverbindung 1, bei der die Klammer 4 von oben her an die sich gegenüberliegenden Schrauben 5 am Kopfholz 2a übergestülpt werden. Durch diese gegenseitige Ausrichtung und Zentrierung ergibt sich eine exakte Ausrichtung der Bauelemente 2 untereinander.

In Fig. 3 ist eine Draufsicht auf eine Klammer 4 der Holzbauverbindung 1 (gemäß dem Pfeil III in Fig. 1) gezeigt, woraus sich die Gestaltung der hinterschnittenen Nuten 4a ergibt, insbesondere die exakte Anpassung der Schrägflächen 4c an die konischen Schraubenköpfe 5a. Bevorzugt sind dabei über diese Kunststoff-Buchsen 5b übergestülpt, so dass sich eine Schallentkopplung zwischen den Bauelementen 2 ergibt. Durch ein reibungsminderndes Material der Buchsen 5b kann zudem die erforderliche Montagekraft beim Aufschieben der Klammer 4 reduziert werden. Da die Klammer 4 bevorzugt als Aluminium-Gussteil ausgeführt ist, kann die Ausrichtung der Nuten 4a auch leicht schräg zu einem Zentrum hin verlaufen, so dass die Schrauben 5 schräg zum Kopfholz 2a beziehungsweise Fußholz 2b eingedreht werden können. Dies hat den Vorteil, dass die Auszugsfestigkeit der Schrauben 5 zusätzlich erhöht wird.

Wie in Fig. 2 dargestellt, können zudem beim Gießen der Klammer 4 auch bereits Durchbrüche 6 vorgesehen sein, mit denen die Klammer 4 an den Bauelementen 2 fixiert werden kann. Zudem kann auch wenigstens eine Querbohrung 7 (auch als Einschubloch gegossen) vorgesehen sein, in die beispielsweise ein Querriegel 8 eingesetzt werden kann, wie dies in Figur 2 in Strichpunktlinien angedeutet ist. Hierdurch kann eine weitere Stabilisierung der Holzbauverbindung 1 erreicht werden. Der Querriegel 8 kann jedoch auch nur als relativ lose Sicherung dienen, um ein Abrutschen der Klammer 4 von den Schraubenköpfen 5a zu vermeiden, beispielsweise wenn zwei schmälere Bauelemente 2 bereits werkseitig miteinander verbunden sind und so zusammen auf die Baustelle transportiert und abgesetzt werden.

Es sei darauf hingewiesen, dass in abgewandelter Ausführungsform der Klammer 4 deren Zinken 4b auch unterschiedliche Höhen besitzen können, beispielsweise um beim Absenken der Bauelemente 2 eine bessere Führung entlang der Nuten 4a zu erzielen. Die Klammerhälften können auch gegeneinander versetzt sein, also eine Hälfte der Klammer 4 mit den Nuten 4a nach oben zeigen, während die andere Hälfte mit den Nuten 4a um 180° versetzt nach unten zeigt. Eine derartige Klammer 4 eignet sich insbesondere zum Anschluss von Querwänden bzw. Innenwänden bei der Montage des Fertighauses, da hierbei die Klammer 4 einerseits befestigt werden kann, beispielsweise durch Schrauben oder Nageln an einem der Durchbrüche 6. Daraufhin kann dann die Querwand von oben in die verbleibenden Nuten 4a eingesetzt werden, so dass wiederum die leicht überstehenden Schraubenköpfe 5a in die entsprechenden Nuten 4a eingreifen. Hierbei werden die Schraubenköpfe 5a ebenso wie bei der Ausführungsform gemäß Fig. 2 und 3 seitlich ausgerichtet und durch die leichte Neigung der Hinterschneidungen bzw. Schrägflächen 4c zueinander hingezogen. Somit ergibt sich eine erhebliche Aussteifung des gesamten Bauwerkes.

In Fig. 3 ist als Ersatz des oder auch als Ergänzung zum Querriegel 8 eine Federstahlleiste 9 an der Klammer 4 angebracht, bevorzugt an den Spitzen der Zinken 4b eingesetzt oder eingegossen. Diese Federstahlleiste 9 weist eine entgegen der Einschubrichtung der Schraubenköpfe 5a gerichtete V-Form auf, so dass die Federstahlleiste 9 beim Einschieben der Schraubenköpfe 5a etwas zurückfedert, diese dann passieren lässt und dann wieder auffedert (vgl. Einzeldarstellung im Querschnitt links neben der Figurenbezeichnung). Hierdurch wird eine Sperrwirkung oder Fixierung der Schraubenköpfe 5a in der jeweiligen Nut 4a erzielt. Zum Abnehmen der Klammer 4 kann die Federstahlleiste 9 mit einer Zange oder einer Schraubendreherklinge oder ähnlichen Werkzeugen zusammengedrückt werden, so dass die Schraubenköpfe 5a zur Entriegelung der Holzbauverbindung 1 dann wieder aus der Nut 4a ausgeschoben werden können.

## Patentansprüche

1. Holzbauverbindung, insbesondere für Fertighäuser, zur Koppelung von Holz-Bauelementen an Stossebenen mittels formschlüssiger Beschläge
**dadurch gekennzeichnet, dass**
die Beschläge als Klammern (4) ausgebildet sind, in deren Nuten (4a) mehrere, überstehende Schraubenköpfe (5a) von Schrauben (5) einschiebbar sind, die in den Bauelementen (2) im Bereich der Stossebene (3) angeordnet sind.

2. Holzbauverbindung nach Anspruch 1, **dadurch gekennzeichnet, dass** die Schraubenköpfe (5a) bündig zur Stossebene (3) in ein Kopf- oder Fußholz (2a, 2b) eingeschraubt sind, das zur Stoßebene (3) um etwa die dreifache Schraubenkopfdicke zurückgesetzt ist.

3. Holzbauverbindung nach Anspruch 1 oder 2, **dadurch gekennzeichnet, dass** die Schrauben (5) jeweils in ein Kopfholz (2a) und ein Fußholz (2b) der Bauelemente (2) eingeschraubt sind.

4. Holzbauverbindung nach Anspruch 3, **dadurch gekennzeichnet, dass** wenigstens eine Schraube (5) geneigt oder schräg zur Hauptrichtung des Kopf- bzw. Fußholzes (2a, 2b) eingeschraubt ist.

5. Holzbauverbindung nach einem der Ansprüche 1 bis 4, **dadurch gekennzeichnet, dass** die Klammer (4) als Gussteil, bevorzugt aus Aluminium ausgebildet ist, insbesondere mit vier Nuten (4a).

6. Holzbauverbindung nach einem der Ansprüche 1 bis 5, **dadurch gekennzeichnet, dass** die Nuten (4a) jeweils zur Einschubrichtung der Schraubenköpfe (5a) geneigte Schrägflächen (4c) aufweisen.

7. Holzbauverbindung nach einem der Ansprüche 1 bis 6, **dadurch gekennzeichnet, dass** an der Klammer (4) wenigstens eine Querbohrung (7) vorgesehen ist, in die ein Querriegel (8) zur Fixierung der Schraubenköpfe (5a) elnsetzbar ist.

8. Holzbauverbindung nach einem der Ansprüche 1 bis 7, **dadurch gekennzeichnet, dass** die Nuten (4a) sich entgegen der Einschubrichtung der Schrauben (5) V-förmig kontinuierlich verbreitern.

9. Holzbauverbindung nach einem der Ansprüche 1 bis 8, **dadurch gekennzeichnet, dass** an den Schraubenköpfen (5a) Buchsen (5b), insbesondere aus reibungsminderndem Kunststoff zur Schallentkopplung übergestülpt sind.

10. Holzbauverbindung nach einem der Ansprüche 1 bis 9, **dadurch gekennzeichnet, dass** zur Fixierung der Schraubenköpfe (5a) ergänzend oder alternativ zum Querriegel (8) eine Federstahlleiste (9) vorgesehen ist, die bei montiertem Zustand der Schraubenköpfe (5a) über diesen formschlüssig auffedert.
